Europäisches Patentamt

European Patent Office

Office européen des brevets

(19)

(11) **EP 0 573 321 B1**

(12) **FASCICULE DE BREVET EUROPEEN**

(45) Date de publication et mention
de la délivrance du brevet:
**28.08.1996 Bulletin 1996/35**

(51) Int Cl.6: **G01S 7/40**, G01S 13/34

(21) Numéro de dépôt: **93401182.6**

(22) Date de dépôt: **07.05.1993**

(54) **Procédé de compensation automatique de la non linéarité de la pente de modulation d'un radar à onde continue modulée en fréquence, et radar pour sa mise en oeuvre**

Verfahren und Einrichtung zur automatischen Kompensation der Nichtlinearität der Modulationsgeraden für Radar mit Frequenzmodulation

Method and device for the automatic compensation of non-linearity of the linear modulation slope of a swept-frequency radar

(84) Etats contractants désignés:
**DE FR GB**

(30) Priorité: **26.05.1992 FR 9206434**

(43) Date de publication de la demande:
**08.12.1993 Bulletin 1993/49**

(73) Titulaire: **THOMSON-CSF**
**75008 Paris (FR)**

(72) Inventeur: **Pezet, Bernard**
**F-92402 Courbevoie Cedex (FR)**

(74) Mandataire: **Beylot, Jacques et al**
**Thomson-CSF**
**SCPI**
**B.P. 329**
**92402 Courbevoie Cédex (FR)**

(56) Documents cités:
**EP-A- 0 427 206          EP-A- 0 499 952**
**EP-A- 0 501 566          GB-A- 2 210 227**
**US-A- 4 499 435          US-A- 4 593 287**
**US-A- 4 620 192          US-A- 5 172 123**

Printed by Jouve, 75001 PARIS (FR)

## Description

La présente invention concerne les radars à onde continue modulée linéairement en fréquence connus sous la dénomination radar FMCW. Ces radars émettent une onde continue dont la fréquence porteuse évolue linéairement selon des rampes successives dont la durée de l'ordre de la dizaine de millisecondes correspond au temps d'éclairement d'une cible et est très supérieure au temps de retour d'un écho. Ils permettent de remplacer une mesure de délai par une mesure de fréquence, la distance d'une cible étant fonction du retard en réception du signal en retour d'écho et par conséquent de la différence des fréquences porteuses entre les signaux émis et reçus.

La précision de mesure d'un radar FMCW dépend directement de la linéarité de la variation de fréquence porteuse au cours d'une rampe. Or il se trouve qu'il est difficile de moduler linéairement un oscillateur hyperfréquence et surtout de conserver un bon réglage en raison des variations de température et du vieillissement. En effet, le moyen le plus direct consiste à incorporer une ou plusieurs diodes à capacité variable dans le circuit d'accord de l'oscillateur. Or la variation de fréquence d'un oscillateur en fonction d'une réactance du circuit accordé est logarithmique de même que la variation de réactance d'une diode à capacité variable en fonction de la tension de polarisation ce qui rend la variation de fréquence en fonction de la tension de commande fortement non linéaire. Il est possible de s'accommoder de cette non linéarité en choisissant une tension de commande de modulation non linéaire, fonction inverse de la caractéristique fréquence par rapport à la tension de modulation de l'émetteur. Cependant, on rencontre une difficulté due au fait que la caractéristique réactance par rapport à la tension de polarisation d'une diode à capacité variable dépend fortement de la température et du vieillissement de sorte que l'on ne peut se contenter d'un réglage précis effectué une fois pour toutes en usine.

Pour résoudre ce problème, il est connu de faire varier la forme non linéaire de la tension de modulation en fonction d'un signal d'erreur obtenu en mesurant l'écart de fréquence existant entre la fréquence porteuse d'émission disponible directement en sortie de l'oscillateur et la fréquence porteuse d'émission soumise à un retard fixe dans une ligne à retard connectée en dérivation sur la sortie de l'oscillateur, et en comparant la valeur de l'écart de fréquence obtenu avec la valeur théorique.

Cette solution a pour inconvénient d'être coûteuse car elle nécessite pour être mise en oeuvre toute une circuiterie hyperfréquence. Il faut en effet un coupleur pour dériver une partie du signal d'émission, une ligne à retard calibrée, un modulateur pour faire battre les deux fréquences porteuses, un fréquencemètre pour apprécier l'écart de fréquence et un comparateur pour comparer cet écart de fréquence à la valeur théorique.

La présente invention a pour but de résoudre le problème précité sans pour autant nécessiter de composants hyperfréquences supplémentaires, en profitant de la présence habituelle, dans la partie réception d'un radar FMCW, d'un analyseur de spectre utilisé pour identifier et séparer les différentes raies de fréquence correspondant aux échos observés pendant une rampe.

Elle a pour objet un procédé de compensation automatique de la non linéarité de la pente de modulation d'un radar FMCW pourvu, en partie émission, d'un oscillateur commandé en tension engendrant le signal d'émission et d'un générateur de rampe engendrant le signal de commande de modulation en fréquence dudit oscillateur, et, en partie réception, d'un analyseur de spectre permettant d'identifier et de séparer, dans le signal reçu au cours d'une rampe et démodulé par le signal d'émission, différentes raies de fréquence correspondant aux échos observés. Ce procédé consiste à asservir la forme du signal du générateur de rampe sur un extremum d'un signal d'erreur tiré du signal de sortie de l'analyseur de spectre et représentatif de la résolution moyenne du spectre de fréquence correspondant aux échos observés au cours de chaque rampe.

La résolution moyenne du spectre de fréquence des échos observés au cours de chaque rampe, c'est-à-dire sa finesse, traduit les non linéarités de la pente de modulation car ces dernières engendrent des modulations de fréquence tendant à écraser et à élargir le spectre de fréquence des échos ponctuels.

L'appréciation de la résolution moyenne du spectre de fréquence des échos observés au cours de chaque rampe peut se faire par l'intermédiaire d'un signal d'erreur, tiré du signal de sortie de l'analyseur de spectre, représentatif de la valeur moyenne du rapport de l'amplitude de la plus grande raie de fréquence et du niveau de bruit fournis par l'analyseur de spectre. L'asservissement de la forme du signal du générateur de rampe s'effectue alors sur un maximum du signal d'erreur.

L'appréciation de la résolution moyenne du spectre de fréquence des échos observés au cours de chaque rampe peut également se faire par l'intermédiaire d'un signal d'erreur, tiré du signal de sortie de l'analyseur de spectre, représentatif de la largeur moyenne à 3 db du pic de la fonction d'autocorrélation du spectre de fréquence délivré par l'analyseur de spectre au cours de chaque rampe. L'asservissement de la forme du signal du générateur de rampe s'effectue alors sur un minimum du signal d'erreur.

L'invention a également pour objet un radar FMCW pour la mise en oeuvre du procédé précité.

D'autres caractéristiques et avantages de l'invention ressortiront de la description d'un mode de réalisation donné à titre d'exemple. Cette description sera faite ci-après en regard du dessin dans lequel :

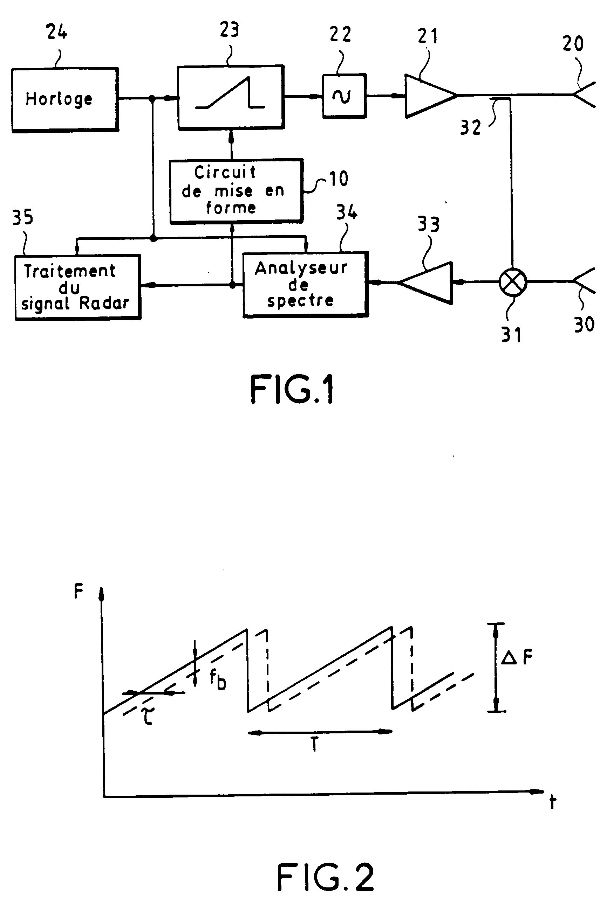

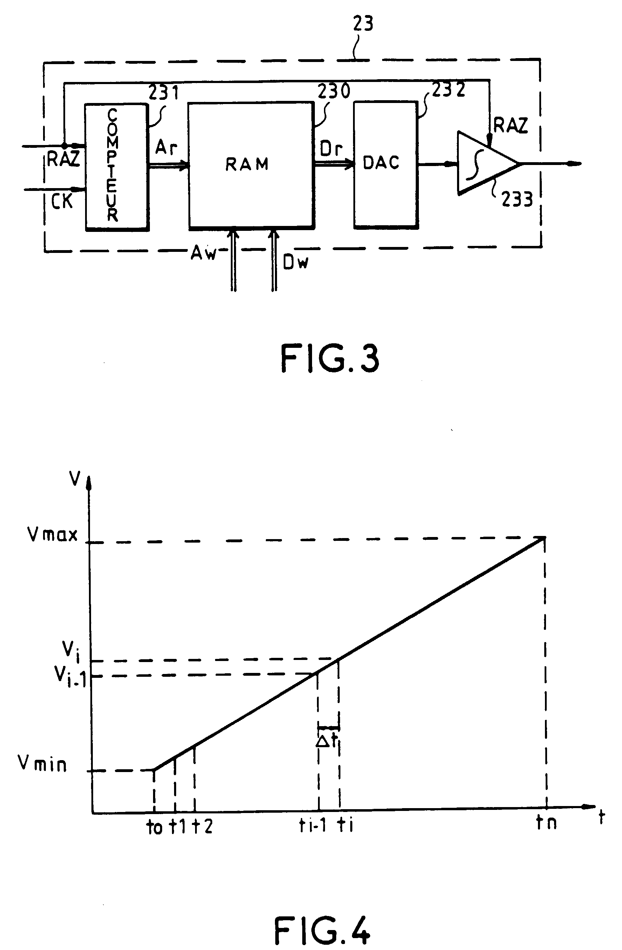

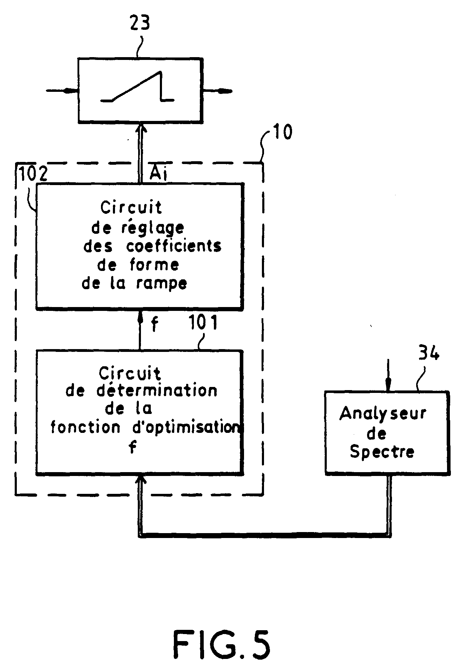

- une figure 1 représente un schéma d'un radar FMCW mettant en oeuvre l'invention ;
- une figure 2 est un diagramme représentant un exemple de variation de fréquence en fonction du temps du signal émis par un radar FMCW ;
- une figure 3 détaille la constitution d'un générateur de rampe apparaissant à la figure 1 ;
- une figure 4 est un diagramme illustrant le choix de coefficients déterminant la forme du signal du générateur de rampe représenté à la figure 3 et ;
- une figure 5 détaille la constitution d'un circuit de mise en forme apparaissant à la figure 1.

Dans les différentes figures, les mêmes références se rapportent aux mêmes éléments.

La figure 1 montre l'implantation parmi les éléments essentiels d'un radar FMCW, d'un circuit de mise en forme 10 assurant une compensation automatique de non linéarité de modulation selon le procédé de l'invention.

La voie émission de ce radar FMCW comporte, de manière usuelle, une antenne d'émission 20, un émetteur 21, un oscillateur commandé en tension 22, un générateur de rampe 23 et une horloge 24 commune avec la voie réception. L'horloge 24 rythme le générateur de rampe 23 qui fournit la tension de commande de fréquence à l'oscillateur commandé en tension 22. Ce dernier dont la fréquence évolue selon des rampes successives pilote l'émetteur 21 qui excite l'antenne d'émission 20.

La voie réception de ce radar FMCW comporte, également de manière usuelle, une antenne de réception 30, un mélangeur 31, un coupleur 32, un récepteur 33, un analyseur de spectre 34 et un circuit de traitement du signal radar 35. L'antenne de réception 30 excite l'une des entrées du mélangeur 31 dont l'autre entrée est couplée à la sortie de l'émetteur 21 par l'intermédiaire du coupleur 32. Le battement entre les signaux émis et reçus disponible en sortie du modulateur 31 est porté à une amplitude constante par le récepteur 33 avant d'être soumis à l'analyseur de spectre 34 qui en extrait des raies de fréquence ce qui permet au circuit de traitement du signal radar 35 de séparer les échos en distance.

Dans le cas du fonctionnement idéal, l'émetteur 11 engendre, comme représenté par la courbe en trait continu de la figure 2, un signal dont la fréquence porteuse évolue linéairement selon des rampes successives par exemple du type toit d'usine. En supposant pour simplifier qu'il n'y ait qu'un seul écho, le signal retourné par l'écho représenté par la courbe en traits discontinus de la figure 2 est constitué du signal émis retardé d'un délai $\tau$ tel que :

$$\tau = \frac{2D}{c}$$

D étant la distance radiale de l'écho et c la vitesse de la lumière.

En réception, après démodulation du signal reçu par le signal émis, il apparaît, sur la majeure partie d'une rampe dont la durée est supposée très supérieure à la plage de valeur du délai $\tau$, un battement à la fréquence fb tel que :

$$\frac{\tau}{T} = \frac{fb}{\Delta f}$$

avec T durée de la rampe et $\Delta f$ excursion en fréquence de la rampe.
La distance de l'écho D est alors donnée par la relation :

$$D = \frac{1}{2} cT \frac{fb}{\Delta f}$$

Dans le cas où il y a plusieurs échos à différentes distances, la démodulation du signal reçu par le signal émis donne un signal composite constitué de plusieurs fréquences de battement dont on identifie et sépare les raies par analyse spectrale ce qui permet de détecter les échos et de les séparer en distance, et de faire ultérieurement de l'imagerie ou de la reconnaissance de forme par un traitement adéquat du signal radar.

Dans la pratique il est difficile de conserver à l'émission la linéarité de la modulation de la fréquence porteuse au cours des rampes en raison de la dérive des caractéristiques des composants utilisés aussi bien en fonction de la température que du vieillissement de sorte que le battement en réponse à un écho n'est plus une fréquence pure fb mais une fréquence modulée par les non linéarités de la rampe émise ce qui dégrade la résolution en distance.

Pour résoudre ce problème sans faire appel à des composants hyperfréquences, on propose d'asservir la forme de la rampe de tension contrôlant la fréquence de l'oscillateur à un optimum de la résolution moyenne du spectre de fréquence délivré par l'analyseur de spectre. Pour ce faire, on prévoit un générateur de rampe à forme variable 23 modifiable à partir d'une entrée de commande et l'on dispose entre la sortie de l'analyseur de spectre 34 et l'entrée de commande de forme du générateur de rampe 23 un circuit de mise en forme 10 sensible à la résolution moyenne du spectre de fréquence délivré par l'analyseur de spectre.

Dans l'exemple de réalisation que l'on va décrire, le générateur de rampe a la forme de sa rampe ajustée par l'intermédiaire des coefficients de pente locale en des points régulièrement espacés de la rampe et le circuit de mise en forme asservit les valeurs de ces coefficients de pentes locales à un minimum de la largeur moyenne à 3 db du pic de la fonction d'autocorrélation du spectre de fréquence délivré par l'analyseur de spectre.

Le générateur de rampe 23 comporte essentiellement, comme représenté à la figure 3, une mémoire numérique 230 à lecture et écriture indépendantes contenant les valeurs des coefficients de pente locale de la rampe, un compteur 231 rythmé par le circuit d'horloge 24, commandant l'adressage en lecture Ar de la mémoire numérique 230 et assurant une lecture cyclique de cette dernière, un convertisseur numérique analogique 232 transformant en valeurs analogiques les valeurs numériques lues en sortie lecture de données Dr de la mémoire numérique 230 et un circuit intégrateur 233 qui est remis à zéro à la fin de chaque rampe tout comme le compteur 231 et qui intègre la suite des valeurs analogiques des coefficients de pente locale délivrées par le convertisseur numérique analogique 232 afin d'engendrer la rampe de tension de commande de l'oscillateur commandé en tension 22. La mémoire numérique 230 du générateur de rampe présente, outre son entrée d'adressage lecture Ar commandée par le compteur 231 et sa sortie lecture de données Dr raccordée à l'entrée du convertisseur numérique-analogique 232, une entrée d'adressage écriture Aw et une entrée d'écriture de données Dw commandées par le circuit de mise en forme 10.

La figure 4 illustre la définition des coefficients de pente locale Ai par l'intermédiaire desquels on contrôle la forme d'une rampe. Par commodité, on suppose que l'on a à faire à une rampe de tension linéaire en fonction du temps t évoluant d'une tension minimum Vmin à une tension maximum Vmax. La durée T de cette rampe est partagée en n intervalles de temps égaux $\Delta t$ limités par des instants to, ti, ... tn :

$$\forall i \in [o,n] \qquad t_{i+1} - t_i = \Delta t = cste$$

A chaque instant ti, la rampe atteint la tension Vi de sorte que le ième coefficient de pente locale a pour valeur :

$$\forall i \in [1,n] \qquad Ai = \frac{V_i - V_{i-1}}{\Delta t}$$

Dans la pratique on imposera Vmax - Vmin constant pour avoir toujours la même plage de balayage en tension ce qui se traduira par la condition :

$$\sum_{i=1}^{n} Ai = (Vmax - Vmin) \times \frac{1}{\Delta t}$$

L'asservissement conduisant à la calibration de la rampe de tension de commande de fréquence de l'oscillateur pour obtenir une variation linéaire de fréquence consiste à optimiser un coefficient de finesse défini comme étant la moyenne sur cinq rampes successives de la largeur à 3 db du pic de la fonction d'autocorrélation du module du signal issu de l'analyseur de spectre.

En supposant que l'analyseur de spectre effectue une transformation rapide de Fourier sur N points, il délivre un signal complexe

$$s(i) \neq 0 \qquad i \in [1,N]$$

et

$$s(i) = 0 \qquad i \notin [1,N]$$

Le module du signal vaut alors :

$$|s(i)| = \sqrt{s(i) \times s^*(i)}$$

Sa fonction d'autocorrélation Rss(k) est définie par :

$$k \in [-N, +N] \qquad Rss(k) = \sum_{i=1}^{N} |s(i)| \cdot |s(i+k)|$$

où * désigne le complexe conjugué.

Le pic de la fonction d'autocorrélation est donné par la valeur de k = 0. La largeur à 3 db de ce pic est donnée par la différence entre les valeurs $K_1$, $K_2$ de la variable k entourant la valeur 0 pour lesquelles le module de la fonction d'autocorrélation passe par une valeur égale à la moitié du maximum. La moyenne de cette largeur pour cinq rampes consécutives est une fonction des cette largeur pour cinq rampes consécutives est une fonction des coefficients de pente locale Ai pour chaque valeur i qui, au voisinage de l'optimum, peut être approximée par une parabole :

$$f \simeq \frac{1}{2} HiAi^2 + Ki \, Ai + Li$$

avec

$$\frac{\partial f}{\partial Ai} = Hi \, Ai + Ki \qquad\qquad (1)$$

et

$$\frac{\partial^2 f}{\partial A_.^2} = Hi \qquad (2)$$

La valeur optimum de Ai est celle pour laquelle on a :

$$\frac{\partial f}{\partial Ai} = 0$$

d'où

$$Aiopt = -\frac{Ki}{Hi}$$

Elle peut être déterminée en faisant varier le coefficient de pente locale Ai de ± 10 % et en observant la variation de f :

$$\frac{\partial f}{\partial Ai}\,(Ai(1,05)) = \frac{f(Ai(1,1))\text{-}f(Ai(1))}{0,1} \qquad (3)$$

$$\frac{\partial f}{\partial Ai}\,(Ai(0,95)) = \frac{f(Ai(1))\text{-}f(Ai(0,9))}{0,1} \qquad (4)$$

$$\frac{\partial^2 f}{\partial Ai^2}\,(Ai(1)) = \frac{\frac{\partial f}{\partial Ai}(Ai(1,05))\text{-}\frac{\partial f}{\partial Ai}(Ai(0,95))}{0,1} \qquad (5)$$

On tire de la dernière relation (5) la valeur du coefficient Hi et des relations (1) et (3) ou (1) et (4) la valeur du coefficient Ki et on en déduit la valeur optimale du coefficient de pente locale :

$$Ai\ opt = -\frac{Ki}{Hi}$$

Reste, à partir de cette méthode de réglage d'un coefficient de pente locale isolé proche de l'optimum, à parvenir au réglage optimum de l'ensemble des coefficients de pente locale en partant d'une solution nécessairement grossière.

On propose pour ce faire de procéder en plusieurs passes successives au cours desquelles on prend en compte un nombre de plus en plus grand de coefficients de pente locale. On commence par une rampe linéaire présentant des coefficients de pente locale tous identiques permettant de passer sur la durée d'une rampe d'une valeur minimum imposée de tension à une valeur maximum imposée de tension. On affine ensuite cette rampe en découpant la droite qui la représente en deux segments de droite de même longueur dont les pentes sont optimisées, la deuxième pour minimiser la fonction f, la première pour récupérer la déviation de tension imposée. On obtient ainsi deux groupes de coefficients de pente locale. On recommence une autre passe au cours de laquelle chacun des deux segments de la rampe est partagé en deux segments de même longueur dont les pentes sont optimisées ce qui permet la détermination de quatre groupes de coefficients de pente locale et on poursuit jusqu'à obtenir un segment par coefficient local de pente.

Pour permettre ce processus, on choisit un nombre n de coefficients de pente locale le long de la rampe égal à une puissance de $2$

$$n = 2^m$$

ce qui autorise m passes successives. Au cours de la $p^{ième}$ passe, p étant compris entre 1 et m, la rampe de tension de commande de l'oscillateur qui était composée d'une ligne brisée de $2^{p-1}$ groupes de coefficients de pente locale voit chacun de ses segments divisé à nouveau en deux parties égales auxquelles correspondent $2^p$ groupes de $2^{m-p}$ coefficients de pente locale identiques à optimiser.

On note l'ensemble des groupes de coefficients de pente locale obtenu au cours de la $p^{ième}$ passe alors que l'on a optimisé le groupe de coefficients de pente locale du $l^{ième}$ segment par :

$$\left( B_j^{pl} \right)_{j \in \left( 1,2^p \right)}$$

l'indice p compris entre 1 et m représentant le numéro de la passe en cours, l'indice l compris entre 1 et $2^p$ représentant le numéro du dernier segment considéré et l'indice j compris entre 1 et $2^p$ étant l'indice de numérotation des groupes de coefficients de pente locale correspondant aux segments. A la fin des passes, on obtient :

$$\left( B_j^{m,2^m} \right) = ( Ai )$$

avec i = j variant de 1 à $2^m$

Avant d'entamer la première passe, on initialise les coefficients de pente locale à la valeur :

$$\frac{Vmax - Vmin}{n\Delta t}$$

Cela revient, au cours d'une passe 0, à adopter pour la rampe la forme d'un seul segment de droite passant de la tension minimum imposée Vmin à la tension maximum imposée Vmax. Il n'y a alors qu'un seul groupe de coefficients de pente locale qui ont tous la même valeur.

$$B_1^{0,1} = \frac{Vmax - Vmin}{n\Delta t}$$

L'objectif de la p$^{ième}$ passe est de déterminer les groupes de coefficients de pente locale

$$\left( B_j^{p,\,2^p} \right)_{j\in\left(1,2^p\right)}$$

alors que l'on connaît les groupes de coefficients de pente locale issus de la p-1$^{ième}$ passe

$$\left( B_j^{p-1,\,2^{p-1}} \right)_{j\in\left(1,2^{p-1}\right)}$$

Pour commencer la p$^{ième}$ passe, on divise chaque segment de la rampe obtenu au cours de la p-1$^{ième}$ passe en deux parties égales de même pente ce qui permet d'obtenir un ensemble deux fois plus nombreux de groupes de coefficients de pente locale déduit du précédent par la relation :

$$B_i^{p,o} = B_{E[(i+1)/2]}^{p-1,2^{p-1}}$$

E étant la fonction mathématique désignant la partie entière.

On optimise alors la pente de chacun des segments de droite de la rampe en les prenant dans l'ordre d'une tension croissante. L'optimisation de la pente du premier segment (l = 1) n'est pas nécessaire car l'opération de normalisation visant à imposer un balayage de tension fixe élimine un degré de liberté.

Supposons que l'on soit parvenu au cours de la p$^{ième}$ passe à l'optimisation de la pente locale du l-1$^{ième}$ segment, l'optimisation de la pente du l$^{ième}$ segment se fait selon les étapes suivantes :

Etape 1

On fait varier le groupe de coefficients de pente locale correspondant au l$^{ième}$ segment d'une valeur x de ± 10 % tout en conservant les valeurs des autres groupes de coefficients de pente locale. Cela revient à adopter un nouveau jeu de groupes de coefficients de pente locale de la forme :

$$C_i^{p,l}(x) = B_i^{p,l-1} \qquad \forall\ i\neq l$$

et

$$C_i^{p,l}(x) = xB_l^{p,l-1}$$

Etape 2

On normalise le nouveau jeu de groupes de coefficients de pente locale adopté de manière à conserver la même amplitude de balayage de tension ce qui revient à poser :

$$\forall i\in\left[1,2^p\right] \qquad B_i^{p,l}(x) = \frac{2^p B_1^{0,1}}{\sum\limits_{j=1}^{2^p} C_j^{p,l}(x)}\ C_i^{p,l}(x)$$

Etape 3

On calcule le jeu de groupes de coefficients de pente

$$\left( B_i^{p,l}(x) \right)_{i \in \left(1,2^p\right)}$$

pour x égal à 0,9 ; 1,1 et 1. Dans le cas x = 1 on a :

$$\left( B_i^{p,l}(1) \right)_{i \in \left(1,2^p\right)} = \left( B_i^{p,l-1} \right)_{i \in \left(1,2^p\right)}$$

Etape 4

On mesure les valeurs de la fonction f pour les valeurs de x choisies (0,9 et 1,1) qui sont $f^{p,l}(0,9)$ et $f^{p,l}(1,1)$ sachant que la valeur de la fonction f, pour x égal 1, $f^{p,l}(1)$ a déjà été mesurée lors de l'optimisation de la pente du segment précédent.

Etape 5

On calcule les dérivées première et seconde de la fonction f à partir des relations :

$$\frac{\partial f}{\partial x}\left( B_i^{p,l}(0,95) \right) = D^{p,l}(0,95) = 10\left[ f^{p,l}(1) - f^{p,l}(0,9) \right]$$

$$\frac{\partial f}{\partial x}\left( B_i^{p,l}(1,05) \right) = D^{p,l}(1,05) = 10\left[ f^{p,l}(1,05) - f^{p,l}(1) \right]$$

$$\frac{\partial^2 f}{\partial x^2}\left( B_i^{p,l}(1) \right) = H^{p,l} = 10\left[ D^{p,l}(1,05) - D^{p,l}(0,95) \right]$$

Etape 6

On fait l'hypothèse de linéarité locale de la dérivée de la fonction f et l'on calcule la valeur $X^{p,l}$ pour laquelle elle s'annule :

$$x^{p,l} = 0,95 - D^{p,l}(0,95) \times \frac{1}{H^{p,l}}$$

Etape 7

On calcule le jeu de groupes de coefficients de pente locale correspondant à l'optimum annulant la dérivée de la fonction f par les relations utilisées à l'étape 1

$$C_i^{p,l}\left( x^{p,l} \right) = B_i^{p,l-1} \quad \forall i \neq l$$

et

$$C^{p,l}\left(x^{p,l}\right) = x^{p,l}.B^{p,l-1}$$

Etape 8

On normalise le jeu de groupes de coefficients de pente locale obtenu pour conserver la même amplitude de balayage de tension :

$$\forall i \in \left[1,2^p\right] \quad B_i^{p,l}\left(x^{p,l}\right) = \frac{2^p B_1^{0,1}}{\sum\limits_{j=1}^{2^p} C_j^{p,l}\left(x^{p,l}\right)} C_i^{p,l}\left(x^{p,l}\right)$$

Etape 9

On mesure alors la valeur $f^{p,l}(x^{p,l})$ de la fonction f obtenue avec ce nouveau jeu de groupes de coefficients de pente locale et on examine si l'inégalité :

$$f^{p,l}\left(x^{p,l}\right) < \text{Min}\left(f^{p,l}(0,9),f^{p,l}(1),f^{p,l}(1,1)\right)$$

est vérifiée. Sinon, on choisit x min tel que :

$$f^{p,l}\left(X_{min}\right) = \text{Min}\left(f^{p,l}(0,9),f^{p,l}(1),f^{p,l}(1,1),f^{p,l}(x^{p,l})\right)$$

et on recalcule un nouveau jeu de groupes de coefficients de pente locale conformément aux étapes 7 et 8 en remplaçant $x^{p,l}$ par xmin.

On peut alors passer à l'optimisation de la pente du l + 1 [ième] segment et reprendre les étapes 1 à 9.

Une fois la p [ième] passe terminée on connaît les groupes de coefficients de pente locale :

$$\left(B_j^{p,2^p}\right)_{j\in\left(1,2^p\right)}$$

On effectue toutes les passes restantes jusqu'à la m [ième] à la fin de laquelle on obtient les groupes de coefficients de pente locale

$$\left(B_j^{m,2^m}\right)_{j\in\left(1,2^m\right)}$$

qui ne sont autres que l'ensemble des coefficients de pente locale

$$\left(A_j\right)_{j\in\left(1,2^m\right)}$$

utilisés pour la mise en forme de tension assurant la commande de fréquence de l'oscillateur commandé en tension.

Le procédé de réglage qui vient d'être décrit est utilisé à la mise en route du radar FMCW. En cours de fonctionnement, pour le maintien à l'optimum de la forme de la rampe de tension de commande de fréquence il suffira de répéter périodiquement les opérations de la dernière passe m, la périodicité étant choisie en fonction des effets attendus des variations de température et du vieillissement.

Pour affiner le résultat on peut éventuellement faire suivre la m [ième] passe d'une passe supplémentaire testant des variations de coefficient de pente locale de moindre ampleur par exemple 5 % au lieu de 10 %.

La figure 5 illustre les deux parties principales du circuit de mise en forme 10 qui sont un circuit 101 de détermination de la fonction d'optimisation opérant sur le signal délivré par l'analyseur de spectre 34 et un circuit 102 de réglage des coefficients définissant la forme du signal du générateur de rampe 23. Bien évidemment, le circuit de mise en forme 10 est un circuit à base de microprocesseur qui met en oeuvre un algorithme reproduisant les différentes étapes du procédé de réglage automatique qui vient d'être décrit.

Ce procédé peut subir différentes variantes, sans sortir du cadre de l'invention. On peut notamment adopter comme critère d'optimisation non pas la largeur moyenne à 3 db du pic de la fonction d'autocorrélation du spectre de fréquence délivré par l'analyseur de spectre mais la valeur moyenne du rapport de l'amplitude de la plus grande raie de fréquence et du niveau de bruit fournis par l'analyseur de spectre. L'asservissement de la forme du signal du générateur de rampe s'effectue alors sur un maximum de ce critère qui a l'avantage d'être plus simple à mettre en oeuvre mais qui est plus grossier. On peut également adopter d'autres critères d'optimisation toujours représentatifs de la résolution moyenne du spectre de fréquence délivré par l'analyseur de spectre, tel qu'un moment statistique (écart type ou moment d'ordre supérieur) du spectre de fréquence délivré par l'analyseur de spectre ou encore la largeur d'une raie correspondant à une cible mobile.

De même, au lieu de contrôler la forme du signal du générateur de rampe par des coefficients de pente locale, on peut la contrôler directement par un échantillonnage des valeurs de tension atteintes en fonction du temps ou encore à partir des coefficients d'un polynôme du $N^{ième}$ degré définissant la forme de la rampe.

L'exemple de procédé de réglage automatique qui vient d'être décrit l'a été pour la calibration automatique de la pente d'un radar FMCW mais il est bien évident qu'il est applicable à tous les systèmes FMCW qu'ils soient RADAR, SONAR, LIDAR.

## Revendications

1. Procédé de compensation automatique de la non linéarité de la pente de modulation d'un radar à onde continue modulée en fréquence comportant, en partie émission, un oscillateur commandé en tension (22) engendrant le signal d'émission et un générateur de rampe (23) engendrant le signal de modulation en fréquence dudit oscillateur (22), et, en partie réception, un analyseur de spectre (34) permettant d'identifier et de séparer, dans le signal reçu au cours d'une rampe et démodulé par le signal d'émission, différentes raies de fréquence correspondant aux échos observés, caractérisé en ce qu'il consiste à asservir la forme du signal du générateur de rampe (23) sur un extremum d'un signal d'erreur tiré du signal de sortie de l'analyseur de spectre (34) et représentatif de la résolution moyenne du spectre de fréquence des échos observés au cours de chaque rampe, ledit extremum étant choisi pour optimiser ladite résolution moyenne.

2. Procédé selon la revendication 1, caractérisé en ce que ledit asservissement se fait sur un maximum d'un signal d'erreur constitué de la valeur moyenne du rapport de l'amplitude de la plus grande raie de fréquence et du niveau de bruit fournis par l'analyseur de spectre (34).

3. Procédé selon la revendication 1, caractérisé en ce que ledit asservissement se fait sur un minimum d'un signal d'erreur constitué de la largeur moyenne du pic de la fonction d'autocorrélation du spectre de fréquence délivré par l'analyseur de spectre (34) au cours de chaque rampe.

4. Procédé selon la revendication 1, caractérisé en ce que la forme du signal du générateur de rampe (23) est asservie au moyen des coefficients de pente locale.

5. Radar à onde continue modulée en fréquence comportant, en partie émission, un oscillateur commandé en tension (22) engendrant le signal d'émission et un générateur de rampe (23) engendrant le signal de modulation en fréquence dudit oscillateur (22), et, en partie réception, un analyseur de spectre (34) permettant d'identifier et de séparer, dans le signal reçu au cours d'une rampe et démodulé par le signal d'émission, différentes raies de fréquence correspondant aux échos observés, caractérisé en ce qu'il comporte en outre un circuit de mise en forme (10) qui est intercalé entre la sortie de l'analyseur de spectre (34) et une entrée de commande de la forme du signal du générateur de rampe (23) et qui asservit la forme du signal du générateur de rampe de manière à optimiser la résolution moyenne du spectre de fréquence délivré par l'analyseur de spectre (34).

6. Radar selon la revendication 5, caractérisé en ce que ledit circuit de mise en forme (10) comporte un circuit (101) de détermination d'une fonction d'optimisation représentative de la résolution moyenne du spectre de fréquence délivré par l'analyseur de spectre (34) et un circuit (102) de réglage des coefficients de forme du signal du générateur de rampe (23) opérant sous la dépendance de la fonction d'optimisation.

7. Radar selon la revendication 6, caractérisé en ce que le circuit (101) de détermination d'une fonction d'optimisation comporte des moyens pour mesurer la largeur moyenne à 3 db du pic de la fonction d'autocorrélation du spectre de fréquence délivré par l'analyseur de spectre (34).

8. Radar selon la revendication 6, caractérisé en ce que le circuit (102) de réglage des coefficients de forme comporte des moyens pour déterminer les coefficients de pente locale de la rampe de manière à optimiser la résolution moyenne du spectre de fréquence délivré par l'analyseur de spectre (34).

**Patentansprüche**

1. Verfahren zur automatischen Kompensation der Nichtlinearität der Modulationssteigung eines Frequenzmodulation-Dauerstrichradars, das sendeseitig einen das Sendesignal erzeugenden spannungsgesteuerten Oszillator (22) und einen das Frequenzmodulationssignal für den Oszillator (22) erzeugenden Rampengenerator (23) und empfangsseitig einen Spektralanalysator (34) enthält, der es ermöglicht, in dem im Verlauf einer Rampe empfangenen und durch das Sendesignal demodulierten Signal verschiedene Frequenzlinien, die den beobachteten Echos entsprechen, zu identifizieren und auszusondern, dadurch gekennzeichnet, daß es darin besteht, die Form des Signals des Rampengenerators (23) auf einen Extremwert eines Fehlersignals zu regeln, das aus dem Ausgangssignal des Spektralanalysators (34) entnommen worden ist und für die mittlere Auflösung des Frequenzspektrums der im Verlauf jeder Rampe beobachteten Echos repräsentativ ist, wobei der Extremwert so gewählt ist, daß die mittlere Auflösung optimiert wird.

2. Verfahren nach Anspruch 1, dadurch gekennzeichnet, daß die Regelung auf ein Maximum eines Fehlersignals erfolgt, das durch den Mittelwert des Verhältnisses der Amplitude der größten Frequenzlinie und des Rauschpegels gebildet ist, die vom Spektralanalysator (34) geliefert werden.

3. Verfahren nach Anspruch 1, dadurch gekennzeichnet, daß die Regelung auf ein Minimum eines Fehlersignals erfolgt, das durch die mittlere Breite der Spitze der Autokorrelationsfunktion des vom Spektralanalysator (34) im Verlauf jeder Rampe gelieferten Frequenzspektrums gebildet ist.

4. Verfahren nach Anspruch 1, dadurch gekennzeichnet, daß die Form des Signals des Rampengenerators (23) auf den Mittelwert der Koeffizienten der örtlichen Steigung geregelt wird.

5. Frequenzmodulation-Dauerstrichradar, das sendeseitig einen das Sendesignal erzeugenden spannungsgesteuerten Oszillator (22) und einen das Frequenzmodulationssignal für den Oszillator (22) erzeugenden Rampengenerator (23) und empfangsseitig einen Spektralanalysator (34) enthält, der es ermöglicht, in dem im Verlauf einer Rampe empfangenen und durch das Sendesignal demodulierten Signal verschiedene Frequenzlinien, die den beobachteten Echos entsprechen, zu identifizieren und auszusondern, dadurch gekennzeichnet, daß es außerdem eine Signalformerschaltung (10) enthält, die zwischen den Ausgang des Spektralanlaysators (34) und einen Steuereingang für die Form des Signals des Rampengenerators (23) eingefügt ist und die Form des Signals des Rampengenerators derart regelt, daß die mittlere Auflösung des vom Spektralanalysator (34) gelieferten Frequenzspektrums optimiert wird.

6. Radar nach Anspruch 5, dadurch gekennzeichnet, daß die Signalsformerschaltung (10) eine Schaltung (101) zur Bestimmung einer Optimierungsfunktion, die für die mittlere Auflösung des vom Spektralanalysator (34) gelieferten Frequenzspektrums repräsentativ ist, und eine in Abhängigkeit von der Optimierungsfunktion arbeitende Schaltung (102) zur Einstellung der Formkoeffizienten des Signals des Rampengenerators (23) enthält.

7. Radar nach Anspruch 6, dadurch gekennzeichnet, daß die Schaltung (101) zur Bestimmung einer Optimierungsfunktion Mittel zur Messung der mittleren Halbwertsbreite der Spitze der Autokorrelationsfunktion des vom Spektralanalysator (34) gelieferten Frequenzspektrums enthält.

8. Radar nach Anspruch 6, dadurch gekennzeichnet, daß die Schaltung (102) zur Einstellung der Formkoeffizienten Mittel enthält, um die Koeffizienten der örtlichen Steigung der Rampe so zu bestimmen, daß die mittlere Auflösung des vom Spektralanalysator (34) gelieferten Frequenzspektrums optimiert wird.

**Claims**

1.  Method of automatic compensation for the nonlinearity of the modulation slope of a frequency-modulated continuous-wave radar including, in its transmission part, a voltage-controlled oscillator (22) generating the transmission signal and a ramp generator (23) generating the frequency-modulation signal for the said oscillator (22), and, in its reception part, a spectrum analyser (34) making it possible, in the signal received in the course of a ramp and demodulated by the transmission signal, to identify and to separate various frequency lines corresponding to the echoes observed, characterized in that it consists in slaving the shape of the signal of the ramp generator (23) to one extreme of an error signal drawn from the output signal of the spectrum analyser (34) and representative of the average resolution of the frequency spectrum of the echoes observed in the course of each ramp, the said extreme being chosen in order to optimize the said average resolution.

2.  Method according to Claim 1, characterized in that the said slaving is carried out on a maximum of an error signal consisting of the average value of the ratio of the amplitude of the largest frequency line and of the noise level which are supplied by the spectrum analyser (34).

3.  Method according to Claim 1, characterized in that the said slaving is carried out on a minimum of an error signal consisting of the average width of the peak of the autocorrelation function of the frequency spectrum delivered by the spectrum analyser (34) in the course of each ramp.

4.  Method according to Claim 1, characterized in that the shape of the signal from the ramp generator (23) is slaved by means of local-slope coefficients.

5.  Frequency-modulated continuous-wave radar including, in its transmission part, a voltage-controlled oscillator (22) generating the transmission signal and a ramp generator (23) generating the frequency-modulation signal for the said oscillator (22), and, in its reception part, a spectrum analyser (34) making it possible, in the signal received in the course of a ramp and demodulated by the transmission signal, to identify and to separate various frequency lines corresponding to the echoes observed, characterized in that it further includes a shaping circuit (10) which is interposed between the output of the spectrum analyser (34) and an input for control of the shape of the signal of the ramp generator (23), and which slaves the shape of the signal of the ramp generator so as to optimize the average resolution of the frequency spectrum delivered by the spectrum analyser (34).

6.  Radar according to Claim 5, characterized in that the said shaping circuit (10) includes a circuit (101) for determining an optimization function representative of the average resolution of the frequency spectrum delivered by the spectrum analyser (34), and a circuit (102) for setting shape coefficients of the signal of the ramp generator (23) operating under the control of the optimization function.

7.  Radar according to Claims 6, characterized in that the optimization function determination circuit (101) includes means for measuring the average width at 3 dB of the peak of the autocorrelation function of the frequency spectrum delivered by the spectrum analayser (34).

8.  Radar according to Claim 6, characterized in that the shape coefficient setting circuit (102) includes means for determining the local-slope coefficients of the ramp in such as way as to optimize the average resolution of the frequency spectrum delivered by the spectrum analyser (34).

FIG.1

FIG.2

FIG.3

FIG.4

23

102

Ai

Circuit
de réglage
des coefficients
de forme
de la rampe

10

f          101

Circuit
de détermination
de la
fonction d'optimisation
f

34

Analyseur
de
Spectre

FIG.5